# EUROPEAN PATENT APPLICATION

(11) **EP 4 768 547 A1**
(43) Date of publication of application: **01.07.2026**
(21) Application number: 25227798.3
(22) Date of filing: 30.12.2025
(51) Int. Cl.: C09D 5/00, C09D 5/02, C09D 7/61, C09D 7/63, G21F 1/10

(54) **FLUID-APPLLIED MEMBRANE FOR RADON MITIGATION IN CONSTRUCTION APPLICATIONS**

(30) Priority: 30.12.2024 PT 2024119949
(71) Applicant: Oprimee - Innovation Design Engineering Solutions, Lda, 3405-155 Oliveira do Hospital (PT)
(72) Inventor: DOS SANTOS ALMEIDA NUNES, JOÃO MIGUEL, 3405-155 OLIVEIRA DO HOSPITAL (PT)
(74) Representative: Patentree

(57) **Abstract**

The present disclosure relates to a fluid-applied membrane for radon mitigation in construction applications.

It is disclosed a fluid-applied membrane for radon mitigation in construction applications comprising a fluid composition comprising a paraffin-based hydrophobic phase forming a continuous matrix after curing; at least one polymeric binder selected from a list comprising: acrylic, styrene-acrylic, ethylene-vinyl acetate or hydrocarbon resins, or their combinations, and mineral fillers, with a density greater than 3.5 g/cm³, selected from a list comprising: barite, hematite, magnetite, tungsten powder, bismuth powder or combinations thereof, wherein the viscosity of the fluid composition ranges from 0.5 Pa.s to 5 Pa.s at 20°C, interacting with radon gas to prevent radon migration primarily by diffusion resistance and barrier continuity; wherein the fluid-applied membrane thickness, after curing at ambient temperature, ranges from 0.5 mm and 10 mm; wherein the cured membrane exhibits a radon gas diffusion coefficient of 1×10⁻¹³ m²/s or lower, thereby acting as a diffusion barrier preventing radon migration from a sub-floor region into habitable spaces.

## Description

### TECHNICAL FIELD

The present disclosure relates to a fluid-applied membrane for radon mitigation in construction applications.

### BACKGROUND

Radon continues to be one of the primary environmental threats in terms of indoor air pollution, particularly in buildings located in regions with uranium-rich soils. In addition to its radioactive nature, radon can infiltrate buildings through cracks and faults in foundations, posing a hidden yet continuous health risk.

Although systems such as ventilation and physical barriers have been implemented in many construction projects, the available solutions do not provide a complete and durable barrier against radon infiltration. Existing challenges include the limited effectiveness of plastic membranes and physical barriers, which, while effective at blocking water infiltration, do not offer specific protection against radon. These membranes are unable to fully block radon, as the gas can easily seep through small gaps or unsealed areas.

Conventional sealing systems, designed for moisture and water, have not been developed to prevent the passage of radon, and they are ineffective at blocking radioactive gases over time due to their fragility when exposed to adverse environmental conditions. Furthermore, the need for frequent maintenance or material replacement presents an additional challenge, resulting in increased costs and the potential for failure in protective systems.

The document KR102017008B1 discloses a coating agent composition for blocking radon, which can increase the durability of concrete by inhibiting the penetration and the permeation of not only radon, but also gases such as water vapor, volatile organic compounds, organic gases, inorganic gases, or the like, and liquids such as water or the like.

The document KR20110096777A discloses concrete, the red clay, and the white wash composition for the radon reduction having the function being the white wash composition reducing the concentration of the radon generated in the indoor architecture including the gypsum board etc. and of adsorbing the harmful gas which additionally induces the bad smell. The characteristic of the present invention relates to the white pigment as the other additives the silicic acid solution which does not reduce the adsorption characteristic of zeolite is used as the binder the zeolite of the X-type in which the Pore Size is peculiarized into about 10Å is used, the filler, the radiating anion mineral, the silicone emulsion, the fluorinated natrium, and the white wash composition for the radon reduction with an excellent water resistance and fire retardant characteristic the concentration has the room air cleaner knuckle nature the viscosity modifier is mixed and is used and the composition is completed and in that way the concentration of radon is reduced over 45%.

These facts are disclosed in order to illustrate the technical problem addressed by the present disclosure.

### GENERAL DESCRIPTION

The present disclosure relates to a fluid composition for neutralizing and/or adsorbing radon and to a fluid-applied membrane for radon mitigation in construction applications.

The present disclosure comprises a fluid-applied membrane for radon mitigation in construction applications comprising a fluid composition, wherein the viscosity of the fluid composition ranges from 0.5 Pa.s to 5 Pa.s at 20°C, interacting with radon gas to prevent radon migration primarily by diffusion resistance and barrier continuity; wherein the fluid-applied membrane thickness ranges from 0.5 mm and 10 mm after curing to ensure radon impermeability.

The now disclosed technology relates to an innovative fluid-applied membrane designed to enhance protection against radon gas infiltration in buildings. Radon is a naturally occurring radioactive gas that poses significant health risks when it infiltrates indoor environments. The fluid-applied membrane is formulated to create an additional, adaptable barrier that works in conjunction with existing radon-impermeable solutions, improving their overall effectiveness.

The fluid-applied membrane for enhanced radon protection is applied directly to surfaces such as foundations, walls, and floors, forming a seamless, durable, and flexible layer that helps prevent radon infiltration. It allows for easy application on irregular surfaces and in hard-to-reach areas, ensuring uniform coverage.

This fluid-applied membrane offers enhanced flexibility, environmental safety, and minimal maintenance requirements, making it an ideal solution for new constructions and building renovations in areas with high radon exposure. The membrane's durable formulation resists environmental factors such as temperature fluctuations, humidity, and wear, ensuring long-lasting protection against radon.

The disclosed technology pertains to the field of construction technologies, specifically addressing the mitigation of radon gas infiltration into buildings. This solution focuses on the application of an innovative fluid-applied membrane that serves as an additional protective layer, ensuring more effective and durable radon prevention. It is applicable to both new construction projects and for building renovation, especially in buildings located in regions with high radon exposure, providing a practical, efficient, and environmentally friendly approach to radon mitigation.

By offering a flexible, durable, and efficient additional layer of protection, this liquid membrane contributes to better radon prevention, particularly in areas with high radon exposure or where traditional methods may not be sufficient.

The present disclosure, relating to a continuous paraffin-based membrane combined with high-density mineral fillers for controlling radon ingress and moisture penetration in floors and construction elements, provides a set of technical, operational and environmental advantages that clearly distinguish it from known solutions in the prior art, in particular conventional polymeric membranes such as polyethylene (PE) and high-density polyethylene (HDPE), as well as bituminous membranes reinforced with aluminium foil.

A first advantage resides in the achievement of high-level radiological performance at reduced membrane thickness. Conventional polymeric membranes typically exhibit radon diffusion coefficients in the order of 10⁻¹⁰ to 10⁻¹² m²/s. In contrast, the membrane of the present disclosure exhibits a significantly lower radon diffusion coefficient, typically in the order of 10⁻¹³ m²/s or lower, corresponding to values associated with premium radon-barrier materials such as bitumen-aluminium composites. This performance is achieved with substantially lower thickness than required for bituminous systems, resulting in a lighter and thinner barrier with greater construction versatility. The substantial reduction in radon flux provided by the membrane enables compliance with indoor radon concentration reduction targets, for example from 200 to 100 Bq/m³, with a considerable safety margin and reduced material thickness when compared with conventional polymeric membranes.

Along this description, it is considered that the radon diffusion coefficient is determined under steady-state conditions at ambient temperature using standard gas diffusion testing methods. In an embodiment, the radon diffusion coefficient is determined using a two-chamber diffusion cell method. A test specimen is hermetically sealed between a radon source chamber and a receiving chamber such that radon transfer occurs exclusively through the specimen. The source chamber contains a defined radon concentration, while the receiving chamber is initially radon-free.

A further advantage is the formation of a monolithic film without joints. Whereas rolled polymeric and bituminous membranes rely on welds, overlaps and mechanical connections between sheets, which constitute critical points for radon and moisture leakage, the membrane of the present disclosure can be applied in a liquid or semi-liquid state and cures into a continuous, joint-free film. This eliminates vulnerabilities associated with mechanical joints, ensures uniform thickness, and provides complete sealing of the substrate, thereby substantially reducing the risk of localised failure. This characteristic is particularly advantageous in floors with irregular geometries, structural joints, service penetrations or complex interfaces.

The membrane of the present disclosure also provides superior adaptability to complex geometries and enhanced adhesion capability. Conventional membranes have intrinsic limitations in three-dimensional conformability and often require cutting, profiling and auxiliary components to accommodate irregular surfaces. By contrast, the disclosed membrane conforms to the substrate during application, penetrating microcracks and surface irregularities and providing integral sealing even in areas where bituminous or polymeric membranes perform inadequately. Moreover, the paraffinic matrix and binder system may be formulated to optimise adhesion to concrete, screeds, wood-based materials including medium-density fibreboard (MDF) and oriented strand board (OSB), thermal insulation materials and cementitious substrates.

Another advantage is the combined function as both a radon barrier and a water barrier. Known membranes often provide good water impermeability or acceptable radon resistance, but rarely optimise both functions simultaneously. The combination of a hydrophobic paraffin phase with high-density mineral fillers surprisingly results in a membrane providing high resistance to radon diffusion, excellent impermeability to liquid water and rising damp, and improved dimensional stability under prolonged moisture exposure. This multifunctionality reduces the need for additional layers in the floor build-up, simplifying the construction system.

The disclosure further allows adjustable bulk density and optimisation of internal tortuosity. Unlike bituminous membranes reinforced with aluminium, which have a fixed internal structure, the present membrane allows controlled variation of mineral filler content. This modulates the internal diffusion path length and effective density of the matrix, resulting in further reduction of gas permeability. Such formulation flexibility allows the membrane to be tailored to different radon risk levels, floor types and regulatory requirements.

From an environmental and occupational health perspective, the composition and membrane of the present disclosure offer a favourable profile and enables cold application. Bituminous membranes with aluminium reinforcement typically require hot application, may emit volatile organic compounds, and are associated with high carbon footprints due to bitumen and aluminium production. The composition and membrane of the present disclosure can be formulated as a water-based or low volatile organic compounds (low-VOC) system, applied at ambient or moderately elevated temperatures, thereby reducing occupational hazards and environmental impact for both installers and occupants. The use of refined or bio-derived paraffin and natural mineral fillers further reduces the environmental burden when assessed from a life-cycle perspective.

Finally, the disclosed membrane offers improved repairability and integration with existing systems. Localised reapplication is possible without complete removal of the membrane, supporting long-term maintenance strategies. In addition, the membrane may be used as a supplementary reinforcing layer over degraded or insufficient existing membranes, enhancing overall performance without full system replacement.

In summary, while bituminous membranes incorporating aluminium exhibit very low radon diffusion coefficients, the present disclosure provides a superior overall balance of performance when considering barrier continuity, adaptability to complex geometries, sealing capability, ease of application, reduced weight, integrated radon and water resistance, environmental sustainability and suitability for real construction conditions.

It is disclosed a fluid-applied membrane for radon mitigation in construction applications comprising a fluid composition, wherein the viscosity of the fluid composition ranges from 0.5 Pa.s to 5 Pa.s at 20°C, interacting with radon gas to prevent radon migration primarily by diffusion resistance and barrier continuity; wherein the fluid-applied membrane thickness ranges from 0.5 mm and 10 mm after curing to ensure radon impermeability.

An excessively high viscosity of the membrane formulation is undesirable, as it prevents fluid application both by manual spreading methods and by spraying techniques. It is therefore important that the fluid composition exhibits a viscosity sufficiently low to allow uniform spreading across the surface and effective penetration into the pores, microcracks and surface irregularities of the floor or substrate onto which it is applied. At the same time, the viscosity is selected to be high enough to prevent uncontrolled runoff or sagging, thereby ensuring the formation of a continuous, homogeneous layer with the intended thickness and gas-barrier properties after curing or solidification.

In an embodiment, the fluid composition of the fluid-applied membrane for radon mitigation further comprises at least one additive, for better results.

n an embodiment, the fluid-applied membrane for radon mitigation comprises at least one curing agent or crosslinking system, configured to promote film formation, mechanical stability and durability of the cured membrane.

In a further embodiment, the curing agent or crosslinking system is selected, depending on the nature of the polymeric binder, from sulphur-based curing agents, organic peroxides, hydroperoxides, azo compounds, silane-based crosslinking agents, isocyanates or blocked isocyanates, melamine-formaldehyde resins, ureaformaldehyde resins, phenolic resins, polyaziridines, epoxy-functional curing agents, metal salts or metal oxides acting as crosslinking catalysts, acid or latent acid catalysts, or radiation-activated initiators suitable for thermal, UV, or electron-beam curing.

In an embodiment, the fluid composition of the fluid-applied membrane for radon mitigation is applied through spray, brush, trowel, or roller techniques.

In an embodiment, the membrane thickness of the fluid-applied membrane for radon mitigation ranges from 1 mm to 7 mm after curing to ensure radon impermeability, more preferably from 1.5 mm to 5 mm, for better results.

In an embodiment, the fluid-applied membrane for radon mitigation exhibits water-resistant properties in addition to radon impermeability, for better results.

In an embodiment for better results, the fluid-applied membrane for radon mitigation forms an additional layer in combination with existing radon barriers such as geomembranes, vapor barriers or rigid sheets.

It is also disclosed a method for applying the fluid-applied membrane comprising the following steps: preparing the construction surface by cleaning and removing debris; applying the fluid-applied membrane composition over the surface; allowing the composition to cure and form a continuous radon-impermeable barrier, wherein the fluid-applied membrane is applied using spray equipment capable of handling viscosities from 0.5 Pa.s to 5 Pa.s at 20°C.

The present disclosure relates to a fluid composition for blocking, neutralizing and/or adsorbing radon comprising:
a paraffin-based hydrophobic phase, suitable to form a continuous matrix after curing at a temperature ranging from 20 to 25°C;
at least one polymeric binder, selected from a list consisting of: acrylic, styrene-acrylic, ethylene-vinyl acetate, polyethylene, acrylic polymer latex, styrene-acrylic latex, hydrocarbon resins, and combinations thereof; and
a mineral filler selected from a list consisting of: barite, hematite, magnetite, tungsten powder, bismuth powder, and combinations thereof;
wherein the viscosity of the fluid composition ranges from 0.5 Pa.s to 5 Pa.s at 20°C.

In an embodiment, the viscosity values of the fluid composition were determined using a rotational viscometer, at a controlled temperature and shear rate, in particular at a temperature ranging from 20 to 25°C and a shear rate of 10 s⁻¹. The measured viscosity corresponds to the apparent viscosity of the fluid composition.

In an embodiment, the resin is an epoxy resin, acrylic resin, alkyd resin, polyurethane resin, polyester resin, or hydrocarbon resin.

In an embodiment, the acrylic polymer latex, and/or the styrene-acrylic latex has a solids content ranging from 40 to 50 wt.%.

In an embodiment, the fluid composition comprises 5 to 20 wt.% of the paraffin-based hydrophobic phase, preferably 10 to 15 wt.%. In a preferred embodiment, the paraffin-based hydrophobic phase is a paraffin emulsion, more preferably a paraffin emulsion having a solids content ranging from 40 to 50 wt.%.

In an embodiment, the fluid composition comprises 25 to 30 wt.% of at least one polymeric binder, preferably acrylic polymer latex.

In an embodiment, the fluid composition comprises 30 to 60 wt.% of the mineral filler, preferably barite.

In an embodiment, the median particle size of the mineral filler ranges from 5-10 µm, as determined by laser diffraction or an equivalent particle size analysis technique. As used herein, d50 refers to the median particle diameter of the mineral filler, meaning that 50% of the mineral filler particles have a particle diameter smaller than the d50 value and 50% have a particle diameter larger than the d50 value.

In an embodiment, the fluid composition further comprises an aqueous phase, preferably 20 to 25 wt.% of an aqueous phase.

In an embodiment, the aqueous phase comprises water, dispersants and/or surfactants, preservatives, or combinations thereof.

In an embodiment, the fluid composition further comprises at least one additive, preferably 1 to 3 wt.% of the at least one additive.

In an embodiment, the additive is selected from a list consisting of: a dispersant, an antifoaming agent, a thickener, a preservative, and combinations thereof.

In an embodiment, the fluid composition further comprises a curing agent.

The present disclosure also relates to a membrane for neutralizing and/or adsorbing radon comprising the disclosed fluid.

In an embodiment, the membrane thickness ranges from 0.5 mm to 7 mm, more preferably from 1.5 mm to 5 mm.

In an embodiment, the membrane is suitable to be applied on rigid sheets, geomembranes, vapor barriers, or solid ground, preferably between two construction layers.

In an embodiment, the diffusion coefficient of radon in the membrane is less than of 1×10⁻¹³ m²/s.

An aspect of the present disclosure relates to an article comprising the disclosed fluid composition or the disclosed membrane, preferably a wall coating, a floor covering, a ceiling coating or lining, a foundation coating, a roofing underlay, a construction membrane, a panel for building construction, a board for building construction, or a sheet for building construction.

The present disclosure also relates to the use of the disclosed fluid composition or the disclosed membrane as a surface coating for neutralizing and/or adsorbing radon

An aspect of the present disclosure relates to a method for obtaining the disclosed membrane, comprising the following steps:
preparing a surface, preferably by cleaning and removing debris;
applying the disclosed fluid composition over the cleaned surface;
allowing the fluid composition to cure to form the continuous radon-impermeable membrane.

In an embodiment, the surface is a wall coating, a floor covering, a ceiling coating or lining, a foundation coating, a roofing underlay, a construction membrane, a panel for building construction, a board for building construction, a sheet for building construction, a paper, a medium-density fibreboard, a particleboard, a cardboard, a nonwoven fabric, or a plastic film.

In an embodiment, the fluid composition is cured at room temperature, preferably at a temperature ranging from 20 to 25°C.

For the scope and interpretation of the present disclosure it is defined that "room temperature" should be regarded as a temperature between 15-30 °C, preferably between 18-25 °C, more preferably between 20-22 °C.

In an embodiment, the fluid composition is applied over the cleaned surface through spray, brush, trowel, or roller techniques.

### BRIEF DESCRIPTION OF THE DRAWINGS

The following figures provide preferred embodiments for illustrating the disclosure and should not be seen as limiting the scope of invention.
**Figure 1****:** Schematic representation of a cross-sectional view showing the fluid-applied membrane (1) applied over a surface (2), demonstrating its coverage and function as an additional protective layer against radon infiltration.
**Figure 2****:** Schematic representation of the application of the fluid-applied membrane (1) onto surfaces, highlighting its ability to adapt to irregular surfaces such as cracks (3).
**Figure 3****:** Embodiment of radon blocking efficiency as a function of membrane thickness.

### DETAILED DESCRIPTION

The present disclosure relates to a fluid-applied membrane for radon mitigation in construction applications. In particular, the present disclosure relates to a fluid composition for neutralizing and/or adsorbing radon and to a membrane, the fluid-applied membrane, comprising said fluid composition.

It is disclosed a fluid-applied membrane for radon mitigation in construction applications comprising a fluid composition, wherein the viscosity of the fluid composition ranges from 0.5 Pa.s to 5 Pa.s at 20°C, interacting with radon gas to prevent radon migration primarily by diffusion resistance and barrier continuity; wherein the fluid-applied membrane thickness ranges from 0.5 mm and 10 mm after curing to ensure radon impermeability.

When radon gas migrates from an existing or newly constructed floor, towards the fluid-applied membrane (1) applied over a surface (2), the radon exhibits a physical decay period of less than four days, during which radioactive decay occurs and solid decay products are formed. By providing an intermediate membrane (1) acting as a barrier to upward migration, the radon is confined within this zone for the duration of its decay period. As a result, the radon gas is prevented from reaching the upper habitable zones while it is in its gaseous state, which constitutes the physically hazardous state for public health due to the possibility of inhalation at concentrations exceeding tolerable limits for the human body. By maintaining the radon below the membrane for the time required for radioactive decay, the radon is converted into solid decay products that remain retained in the region beneath the membrane, thereby neutralising the risk associated with its gaseous form and inhalation. Furthermore, the incorporation of paraffin within the membrane promotes the retention and absorption of the solid decay products of radon, allowing them to become integrated into the surface of the membrane and further enhancing the confinement and neutralisation of the hazard to public health.

In an embodiment, the disclosed technology further defines the composition and functional characteristics of the radon-barrier membrane (1) in order to avoid ambiguity regarding the nature of the base material, the impermeability mechanism, and the role of optional additives. The membrane is based on a natural, non-toxic paraffin system which is fluid during application and solidifies at ambient temperature into a flexible, continuous solid membrane. This phase-change behaviour enables controlled viscosity during application and ensures the formation of a coherent, joint-free barrier after solidification.

The impermeability mechanism is based on the intrinsic low gas and vapour diffusion coefficient of paraffin, combined with the formation of a continuous, uninterrupted membrane layer free of seams, linear bridges or mechanical perforations. In an embodiment, the membrane is applied in an intermediate position between construction layers, such that subsequent layers are installed immediately after application, thereby preventing puncturing or discontinuities that could otherwise allow radon gas migration. This intermediate application ensures that no joints, overlaps or fasteners are required, and that the membrane remains continuous over the entire surface area.

In an embodiment, the membrane may be characterised by a radon gas diffusion coefficient sufficiently low to substantially inhibit radon flux, typically comparable to or lower than diffusion coefficients of polymeric gas-barrier films or bituminous membranes used for radon protection. The low diffusion coefficient results from the hydrophobic paraffin phase, the absence of interconnected porosity, and the dense structure of the solidified membrane. The sealing of pores, microcracks and interfaces in the underlying substrate further contributes to gas impermeability.

In an embodiment, the membrane is provided as a cold-applied aqueous formulation deposited onto a substrate laid over the floor surface. In an embodiment, the substrate is selected from a list comprising paper, cardboard, fibreboard, MDF, particle board, non-woven fabric, or a thin plastic film, and/or their combinations, arranged continuously across the surface. In an embodiment, the aqueous formulation comprises water, dispersants or surfactants, preservatives, and a polymeric binder selected from acrylic, styrene-acrylic or similar latex systems, which provide film cohesion and mechanical stability. A paraffin component is incorporated in the form of an aqueous paraffin emulsion, and one or more heavy mineral fillers are added to increase density and radiation attenuation.

In an embodiment, the paraffin emulsion comprises a solids content in the range from 40 to 60 wt.% and is present in an amount from 5 to 20 wt.% of the final formulation. In an embodiment, the polymeric binder may be present from 25 to 30 wt.% of the fluid composition, while the mineral fillers may constitute approximately 30 to 40 wt.%. Suitable fillers include finely ground barite, hematite, magnetite, tungsten powder or bismuth powder. Functional additives, such as dispersants, defoamers (antifoaming agents), thickeners and preservatives, may be included in minor amounts to stabilise the formulation and control application properties. After drying, the coating forms a dense, hydrophobic membrane with a thickness typically between about 0.5 and 2.0 mm.

In another embodiment, the membrane is formed as a solvent-based or hot-melt system, with or without a substrate. In these embodiments, the matrix comprises paraffin combined with at least one thermoplastic polymer, such as ethylene-vinyl acetate, low-molecular-weight polyethylene, or synthetic hydrocarbon resins. Heavy mineral fillers are dispersed within the matrix to increase density and shielding performance. In an embodiment of hot-melt implementation, the paraffin and the polymer are heated to a temperature sufficient to produce a flowable mixture, typically in the range of 100 to 140°C, after which the fillers are incorporated. The molten composition is applied by heated spray or spreading means and solidifies upon cooling to form a continuous, flexible solid membrane. In an embodiment of solvent-based implementation, a suitable resin is dissolved in an organic solvent, paraffin is added in liquid or dissolved form, and mineral fillers are dispersed therein. After application, solvent evaporation leaves a dense, continuous film.

In all embodiments, the paraffin phase provides hydrophobicity, limits water ingress that could otherwise mobilise radionuclides, improve cohesion of the membrane, and reduce the formation of shrinkage-induced cracks. The hydrogen-rich hydrocarbon chains of paraffin also contribute to moderation of low-energy and thermal neutrons. The heavy mineral fillers provide attenuation of background gamma radiation originating from naturally occurring radionuclides such as uranium, thorium and potassium-40 present in soil, rock and concrete. While paraffin alone has limited effectiveness against gamma radiation, the combination of a hydrogen-rich phase with high-atomic-number fillers enables effective mixed shielding against both gamma radiation and neutrons.

With respect to radon mitigation, the dominant technical effect is the prevention of radon gas migration from the ground or sub-floor region into habitable spaces. This effect is achieved through the continuous nature of the membrane, the absence of joints or linear discontinuities, the intermediate placement between construction layers, and the low gas diffusion coefficient of the paraffin-based material. The solution is applicable both in new construction and in existing buildings and allows formation of a continuous, non-toxic radon-barrier membrane that is compatible with conventional building practices while providing durable protection against radon ingress.

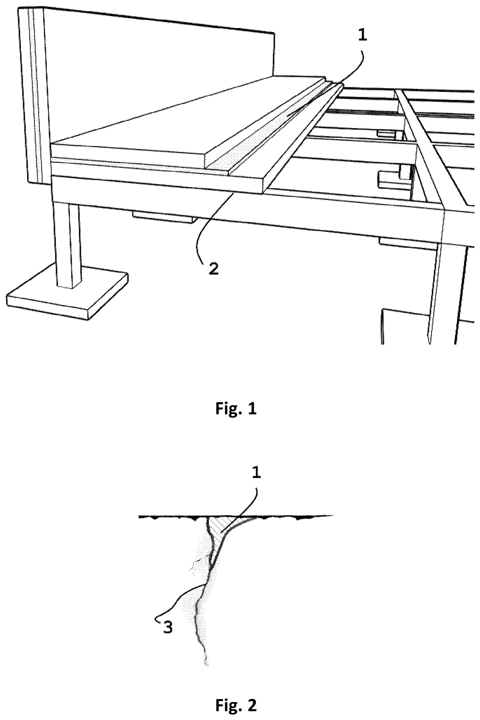

The described technology involves the concept of a fluid-applied membrane (1), represented in Fig. 1, designed to provide additional protection against radon infiltration in buildings. The fluid-applied membrane, which comprises the disclosed fluid composition, is applied over the surface, especially where radon is likely to infiltrate, such as foundations, walls, and floors. It complements existing barrier systems by creating an extra layer that either physically captures or chemically interacts with radon to prevent it from entering the building.

The fluid-applied membrane (1) comprises materials that allow it to create a durable, impermeable barrier against radon, while being adaptable to a variety of construction surfaces. The fluid-applied membrane's flexible nature allows it to cover even irregular surfaces and fill gaps and cracks (3) where traditional barriers might fail, as represented in Fig. 2. In an alternative solution, the fluid-applied membrane can also be applied to a joint.

This technology is particularly useful for buildings in high-radon exposure areas, offering a cost-effective, durable, and environmentally friendly solution. By adding a layer of radon protection, the liquid membrane helps to further mitigate the risks associated with radon exposure, contributing to healthier living environments and improved safety for occupants.

In an embodiment, the thickness of the membrane is not arbitrary but is selected on the basis of physical diffusion behaviour, statistical defect probability, capillary sealing performance and long-term durability. Experimental observations and modelling demonstrate that excessively thin films are unsuitable for reliable radon mitigation, whereas thicknesses within defined ranges provide a robust and reproducible gas-barrier effect.

In very thin layers, typically below about 0.1 mm, the continuity of the membrane is strongly compromised by statistical defects originating from substrate irregularities. Surface asperities, pores, loose fibres or particulate contamination of the support generate local thinning or rupture zones in the applied film. At such low thicknesses, the number of defects per square metre increases sharply, exceeding approximately sixty percent in typical building substrates. Experimental testing shows a significant increase in localised failure points that allow radon gas passage.

In addition, thin layers are ineffective at sealing capillaries and microchannels present in common construction materials such as concrete, screeds, masonry or wood-based panels. In layers of insufficient thickness, pores and microchannels are not fully flooded by the membrane material, allowing the formation of continuous gas pathways across the barrier. When the membrane thickness is increased to values equal to or greater than approximately 0.5 mm, the probability of formation of a continuous microchannel extending through the entire membrane thickness is substantially reduced, resulting in a marked decrease in radon gas transmission.

Membrane thickness also plays a critical role in long-term performance. Over time, construction membranes are subjected to surface erosion, thermal cycling leading to microcrack formation, and mechanical wear. In membranes with an initial thickness of approximately 0.1 mm, any local damage is likely to result in complete rupture and loss of barrier function. In contrast, membranes having an initial thickness of approximately 1 mm may tolerate a loss of 30 to 40 % of their thickness due to ageing effects while still retaining functional gas-barrier properties.

In an embodiment, the dependence of radon flux on membrane thickness has been analysed using a physical diffusion model consistent with barrier materials, wherein the normalised radon flux after passage through the membrane decreases exponentially as a function of membrane thickness. In this model, the transmitted radon flux is expressed as a function of the membrane thickness, an attenuation coefficient dependent on formulation parameters such as paraffin content, degree of compaction and heavy mineral filler loading, and the initial normalised radon flux. The model shows that increasing membrane thickness leads to a substantial reduction in radon transmission

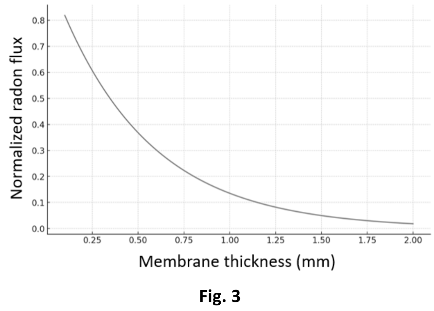

Representative results obtained for a paraffin-based membrane containing heavy mineral fillers and applied on a floor substrate (Figure 3) indicate that a thickness of approximately 0.5 mm yields a normalised radon flux, expressed as a dimensionless ratio relative to the radon flux in the absence of the membrane, on the order of 1.2 × 10⁻³; a thickness of approximately 1.0 mm yields a value of about 6.0 × 10⁻⁴; a thickness of approximately 2.0 mm yields a value of about 3.0 × 10⁻⁴; and a thickness of approximately 5.0 mm yields a value of about 1.2 × 10⁻⁴. These values demonstrate that effective radon mitigation can be achieved at relatively low thicknesses compared to conventional solutions, while still maintaining sufficient robustness.

A comparison with commercially available radon-barrier materials further supports the selected thickness range. Conventional polyethylene membranes exhibit relatively high radon diffusion coefficients, while specialised high-density polyethylene membranes offer improved performance but remain inferior to top-tier bituminous membranes combined with aluminium foil. The paraffin-based membrane with heavy mineral fillers, when applied at a thickness of approximately 2 mm, achieves radon flux values of the same order of magnitude as premium bitumen-plus-aluminium systems, and at thicknesses of approximately 5 mm may even surpass them.

Unlike bitumen-aluminium membranes, which are supplied in rolls and require multiple overlaps, welds and mechanical fixing operations, each joint constituting a potential radon leakage point, the paraffin-based membrane is applied in liquid or semi-liquid form and cures into a continuous monolithic film. This continuous application allows penetration into microfissures of the substrate and eliminates seams and welds, thereby drastically reducing the risk of localised radon leakage caused by execution defects.

In terms of structural load and material efficiency, conventional bitumen-aluminium membranes typically require thicknesses in the range of 2 to 4 mm and exhibit high mass per unit area. The paraffin-based membrane with heavy fillers achieves equivalent radon-barrier performance at thicknesses in the range of approximately 0.5 to 1.5 mm, resulting in reduced weight, lower structural load, easier transport and simplified application.

From an environmental and occupational health perspective, bitumen-aluminium systems are based on fully fossil-derived bitumen and energy-intensive aluminium production, may emit volatile organic compounds during application, and often require high application temperatures, posing risks to workers. In contrast, the proposed membrane is based on paraffin, which may be synthetic, refined or bio-derived, can be formulated in water-based systems, applied at low or moderate temperatures, and allows incorporation of naturally occurring mineral fillers such as barite or hematite. This enables reduced emissions of volatile organic compounds, improved worker safety and a lower overall environmental footprint.

Accordingly, although bituminous membranes incorporating aluminium exhibit very low radon diffusion coefficients, the proposed paraffin-based membrane with heavy mineral fillers is globally superior when assessed against the full set of relevant criteria, including radiological performance, continuity of the barrier, resistance to defects, adaptability to complex geometries, ease of application, structural weight and environmental and occupational health impact.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A fluid composition for blocking, neutralizing and/or adsorbing radon comprising:
a paraffin-based hydrophobic phase, suitable to form a continuous matrix after curing at a temperature ranging from 20 to 25°C;
at least one polymeric binder, selected from a list consisting of: acrylic, styrene-acrylic, ethylene-vinyl acetate, polyethylene, acrylic polymer latex, styrene-acrylic latex, hydrocarbon resins, and combinations thereof; and
a mineral filler selected from a list consisting of: barite, hematite, magnetite, tungsten powder, bismuth powder, and combinations thereof;
wherein the viscosity of the fluid composition ranges from 0.5 Pa.s to 5 Pa.s at 20°C.

2. The fluid composition according to the previous claim wherein the polymeric binder is selected from a list consisting of epoxy resin, acrylic resin, alkyd resin, polyurethane resin, polyester resin, or hydrocarbon resin, and their combination thereof.

3. The fluid composition according to any of the previous claims wherein the acrylic polymer latex, and/or the styrene-acrylic latex has a solids content ranging from 40 to 50 wt.%.

4. The fluid composition according to any of the previous claims comprising 5 to 20 wt.% of the paraffin-based hydrophobic phase, preferably 10 to 15 wt.%, more preferably wherein the paraffin-based hydrophobic phase is a paraffin emulsion, even more preferably a paraffin emulsion having a solids content ranging from 40 to 50 wt.%.

5. The fluid composition according to any of the previous claims comprising 25 to 30 wt.% of at least one polymeric binder, preferably acrylic polymer latex.

6. The fluid composition according to any of the previous claims comprising 30 to 60 wt.% of the mineral filler, preferably barite.

7. The fluid composition according to any of the previous claims wherein the median particle size of the mineral filler ranges from 5-10 µm, measured by laser diffraction or equivalent particle size analysis.

8. The fluid composition according to any of the previous claims further comprising an aqueous phase, preferably 20 to 25 wt.% of an aqueous phase, more preferably wherein the aqueous phase comprises water, dispersants and/or surfactants, preservatives, or combinations thereof.

9. The fluid composition according to any of the previous claims wherein the composition further comprises at least one additive, preferably 1 to 3 wt.% of the at least one additive, preferably wherein the additive is selected from a list consisting of: a dispersant, an antifoaming agent, a thickener, a preservative, and combinations thereof.

10. The fluid composition according to any of the previous claims, further comprising a curing agent.

11. A membrane for radon mitigation by diffusion resistance and/or adsorbing radon comprising the fluid composition of any of the previous claims.

12. The membrane according to the previous claim wherein the membrane thickness ranges from 0.5 mm to 7 mm, more preferably from 1.5 mm to 5 mm, preferably wherein the membrane is a fluid-applied membrane configured to cure into a continuous, joint-free radon barrier layer.

13. The membrane according to any of the previous claims 11-12 wherein the membrane is suitable to be applied on rigid sheets, geomembranes, vapor barriers, or solid ground, preferably between two construction layers.

14. The membrane according to any of the previous claims 11-13, wherein the diffusion coefficient of radon in the membrane is less than of 1×10⁻¹³ m²/s.

15. An article comprising the fluid composition of any of previous claims 1-10 or the membrane of any of the previous claims 11-14, preferably a wall coating, a floor covering, a ceiling coating or lining, a foundation coating, a roofing underlay, a construction membrane, a panel for building construction, a board for building construction, or a sheet for building construction.

16. Use of the fluid composition of any of previous claims 1-13 or the membrane of any of the previous claims 11-14 as a surface coating for acting as a diffusion barrier preventing radon migration and/or adsorbing radon and as an intermediate layer between construction layers, such that the membrane is protected from mechanical perforation and remains continuous over the entire surface.

17. A method for obtaining the membrane of any of the previous claims 11-14, comprising the following steps:
preparing a surface, preferably by cleaning and removing debris;
applying the fluid composition of any of the previous claims 1-13 over the cleaned surface;
allowing the fluid composition to cure to form the continuous radon-impermeable membrane.

18. The method according to the previous claim wherein the surface is a wall coating, a floor covering, a ceiling coating or lining, a foundation coating, a roofing underlay, a construction membrane, a panel for building construction, a board for building construction, a sheet for building construction, a paper, a medium-density fibreboard, a particleboard, a cardboard, a nonwoven fabric, or a plastic film.

19. The method according to any of the previous claims 17-18 wherein the fluid composition is cured at a temperature ranging from 20 to 25°C, preferably wherein the fluid composition is applied over the cleaned surface through spray, brush, trowel, or roller techniques.
